# EUROPÄISCHE PATENTSCHRIFT

(11) **EP 2 520 877 B1**
(45) Veröffentlichungstag und Bekanntmachung des Hinweises auf die Patenterteilung: **19.11.2014**
(21) Anmeldenummer: 12166515.2
(22) Anmeldetag: 03.05.2012
(51) Int. Cl.: H01L 31/042, F24J 2/52, F16B 7/18, F16B 37/04

(54) **Klemmvorrichtung für PV-Module**
Clamping device for PV modules
Dispositif de serrage pour module PV

(30) Priorität: 04.05.2011 DE 102011100484
(43) Veröffentlichungstag der Anmeldung: 07.11.2012
(73) Patentinhaber: Creotecc GmbH, 79111 Freiburg (DE)
(72) Erfinder:
(74) Vertreter: Witte, Weller & Partner Patentanwälte mbB

(56) Entgegenhaltungen:
- EP-A1- 2 246 577
- EP-A2- 1 826 507
- DE-U1-202010 000 545

## Beschreibung

Die vorliegende Erfindung betrifft eine Vorrichtung zum kraftschlüssigen Klemmen eines Photovoltaik-(PV-)Moduls auf eine Trägerschiene, die eine hinterschnitten ausgebildete Nut aufweist.

In dem deutschen Gebrauchsmuster DE 20 2010 000 545 U1 werden zwei Varianten einer Befestigungseinrichtung offenbart, die jeweils einen drehbar gelagerten Nutenstein umfassen, der mittels eines Federelements bei Druckausübung auf die Befestigungseinrichtung von einer Montagestellung in eine verriegelnde Arretierstellung springt. Das aus dem Stand der Technik bekannte Dokument DE 20 2010 000 545 U zeigt:
Eine Vorrichtung zum kraftschlüssigen Klemmen eines PV-Moduls auf eine Trägerschiene, die eine hinterschnitten ausgebildete Nut aufweist, mit:
   einer Gewindestange mit einem Kopf; einem Klemmteil , das eine Öffnung aufweist, in welcher die Gewindestange verliersicher steckt; einem Nutenstein, der mit einem dem Kopf gegenüberliegenden Ende der Gewindestange verbunden ist, wobei der Nutenstein in einer Arretierstellung innerhalb der Nut der Trägerschiene entnahmesicher arretierbar und in einer Montagestellung, die gegenüber der Arretierstellung verdreht ist, axial in die Nut einführbar ist.
Die dort gezeigte Konstruktion hat den Nachteil, dass das Federelement schwierig vorzuspannen ist. Ein weiterer Nachteil ist darin zu sehen, dass nach einer erfolgten Demontage die Feder kompliziert und schwer neu zu spannen ist. Durch die exzentrische Anordnung und Lagerung des Federelements besteht ein Verletzungsrisiko. Die Enden der (Spiral-)Feder sind frei und scharfkantig. Es kann nicht sicher ausgeschlossen werden, dass sich die Feder ungewollt und unbeabsichtigt entspannt und dabei einen Monteur verletzt.

Es ist daher eine Aufgabe der vorliegenden Erfindung, eine Klemmvorrichtung für PV-Module vorzusehen, die die oben erwähnten Nachteile überwindet.

Diese Aufgabe wird gelöst durch eine Vorrichtung zum kraftschlüssigen Klemmen eines PV-Moduls auf eine Trägerschiene, die eine hinterschnitten ausgebildete Nut aufweist, mit: einer Gewindestange mit einem Kopf; einem Klemmteil, das eine Öffnung aufweist, in welcher die Gewindestange verliersicher steckt; einem Nutenstein, der mit einem dem Kopf gegenüberliegenden Ende der Gewindestange verbunden ist, wobei der Nutenstein in einer Arretierstellung innerhalb der Nut der Trägerschiene entnahmesicher arretierbar und in einer Montagestellung, die gegenüber der Arretierstellung verdreht ist, axial in die Nut einführbar ist; einem hülsenförmigen Gegenhalter, der im Klemmteil sitzt und durch den sich die Gewindestange in axialer Richtung erstreckt; und einem Federelement, das an den Nutenstein gekoppelt ist, wobei sich das Federelement zwischen dem Gegenhalter und der Gewindestange in der axialen Richtung durch den Gegenhalter erstreckt und wobei das Federelement einen sich radial nach außen erstreckenden, knieförmigen Abschnitt aufweist; wobei der knieförmige Abschnitt des Federelements mit einer stufenförmigen Ausnehmung im Gegenhalter derart zusammenwirkt, dass der knieförmige Abschnitt bei Ausübung einer axialen Kraft auf das Federelement eine erste Stufe der stufenförmigen Ausnehmung, die den knieförmigen Abschnitt in der vorgespannten Montagestellung hält, in der axialen Richtung überwindet, um dann durch eine zumindest teilweise Entspannung des Federelements entlang der stufenförmigen Ausnehmung in einer Umfangsrichtung in eine zweite Stufe geführt zu werden, die den knieförmigen Abschnitt in der Arretierstellung hält.

Die Klemmvorrichtung der Erfindung ist simpel aufgebaut. Zur Montage und Demontage eines PV-Moduls wird außer einem Werkzeug zum Drehen der Gewindestange kein weiteres Werkzeug benötigt. Eine Verletzungsgefahr ist nicht gegeben, weil das oder die Federelemente geschützt im Inneren des Klemmteils angeordnet sind.

Die Verriegelung des Nutensteins in der Nut der Trägerschiene erfolgt allein durch Ausüben eines Drucks auf das Klemmteil und/oder die Gewindestange. Wenn das Federelement ausreichend komprimiert ist, überwindet der knieförmige Abschnitt des Federelements die erste Stufe. Das Federelement ist dann frei, sich durch eine Rotation zumindest teilweise zu entspannen. Durch die Rotation des Federelements dreht sich auch der Nutenstein aus einer Montagestellung in eine Arretierstellung. In diesem Moment ist die Klemmvorrichtung in der Nut der Trägerschiene gesichert, lässt sich aber noch immer in der vertikalen Richtung bewegen, um ggf. das PV-Modul in eine gewünschte Stellung auszurichten. Erst dann wird die Gewindestange derart gedreht, dass sich der Nutenstein in der vertikalen Richtung an die Nut anlegt, um eine kraftschlüssige Verbindung zwischen dem Klemmteil und der Trägerschiene herzustellen.

Bei einer bevorzugten Ausführungsform weist das Federelement einen spiralförmigen Abschnitt auf, dessen Innendurchmesser so gewählt ist, dass das Federelement axial auf die Gewindestange aufsteckbar ist, und dessen Außendurchmesser so gewählt ist, dass das Federelement in radialer Richtung zwischen die innen angeordnete Gewindestange und den außen angeordneten Gegenhalter passt.

Durch den spiralförmigen Abschnitt wirkt das Federelement als Torsionsfeder. Durch den spiralförmigen Abschnitt können sowohl Torsionskräfte als auch Kompressionskräfte aufgenommen bzw. freigegeben werden.

Durch die koaxiale Anordnung des Federelements und der Gewindestange innerhalb des Gegenhalters baut die Klemmvorrichtung äußerst kompakt.

Bei einer weiteren vorteilhaften Ausgestaltung weist das Federelement einen ersten Anschlagsabschnitt auf, der sich im Wesentlichen in der radialen Richtung erstreckt und der am Klemmteil anliegt.

Da das Federelement innerhalb des Klemmteils angeordnet ist, dient eine Innenwand des Klemmteils als Widerlager für das (mitunter spiralförmige) Federelement, sobald Druck auf das Federelement ausgeübt wird.

Bei einer weiteren Ausgestaltung weist das Federelement einen Verbindungsabschnitt auf, der dem Anschlagsabschnitt, dem spiralförmigen Abschnitt und dem darauf folgenden knieförmigen Abschnitt gegenüberliegt und der sich in der axialen Richtung erstreckt.

Der Verbindungsabschnitt koppelt den Nutenstein an das Federelement und somit auch an das Klemmteil. Der Verbindungsabschnitt dient zur Herstellung eines Kraftschlusses zwischen dem Federelement, dem Klemmteil und dem Nutenstein.

Ferner ist es bevorzugt, wenn das Klemmteil eine Aufnahme definiert, die in Richtung der Trägerschiene offen ist und einen Aufnahmeraum für den Gegenhalter definiert.

In diesen Aufnahmeraum können alle Elemente der Klemmvorrichtung der Erfindung integriert werden, die eine Verletzungsgefahr für den Monteur in sich bergen. Die einzige Öffnung des Aufnahmeraums ist in Richtung der Trägerschiene orientiert, so dass sich die Verletzungsgefahr praktisch auf Null reduziert.

Insbesondere weist der Nutenstein eine parallelogrammförmige Grundfläche auf.

Die parallelogrammförmige Grundfläche ermöglicht eine flächenbündige Kontaktierung des Nutensteins mit den Seitenwänden der Trägerschiene, wenn der Nutenstein in die Arretierstellung gedreht ist.

Weiter ist es bevorzugt, wenn die Gewindestange in eine erste Öffnung des Nutensteins mit einem axialen Spiel eingeschraubt ist und der Nutenstein eine weitere Öffnung zur axialen Aufnahme eines Verbindungsabschnitts des Federelements aufweist.

Gemäß einer weiteren bevorzugten Ausführungsform ist ein weiteres Federelement vorgesehen, welches das Federelement und die Gewindestange koaxial umgibt und in einem Hohlraum angeordnet ist, der sich zwischen einer oberen Stirnseite des Gegenhalters und einer Unterseite einer horizontalen Querwand des Klemmteils bildet.

Dieses zusätzliche Federelement erhöht die Kraft, die erforderlich ist, um das erste Federelement zusammenzupressen, das für den Wechsel zwischen der Montagestellung und der Arretierstellung des Nutensteins verantwortlich ist. Dadurch lässt sich die Wahrscheinlichkeit reduzieren, dass der Nutenstein unbeabsichtigt aus der Montagestellung in die Arretierstellung gedreht wird.

Bei einer besonderen Ausgestaltung ist das Federelement eine Torsionsfeder. Das weitere Federelement kann eine Druckfeder sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine perspektivische Ansicht eines Befestigungssystems, bei dem die (Klemm-)Vorrichtung der Erfindung in Kombination mit einer Trägerschiene zum Einsatz kommt;
- Figur 2: verschiedene Ansichten eines Klemmteils;
- Figur 3: verschiedene Ansichten eines Nutensteins;
- Figur 4: eine geschnittene Ansicht entlang der Linie IV-IV der Figur 1;
- Figur 5: verschiedene Ansichten einer Torsionsfeder;
- Figur 6: verschiedene Ansichten eines Gegenhalters;
- Figur 7: verschiedene Ansichten einer Druckfeder; und
- Figur 8: vier Momentaufnahmen eines Verriegelungsvorgangs.

In der nachfolgenden Beschreibung der Figuren werden gleiche Einheiten, Komponenten, Merkmale oder Ähnliches mit den gleichen Bezugszeichen bezeichnet werden. Gegenstände werden mit abgewandelten Bezugszeichen bezeichnet werden.

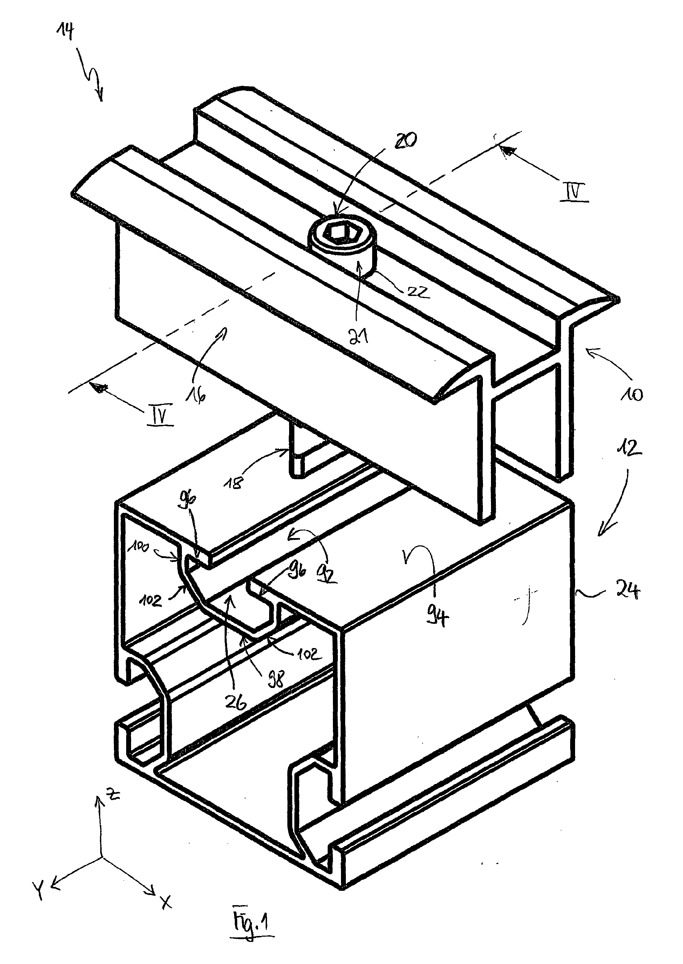

In der Fig. 1 ist eine perspektivische Ansicht einer Klemmvorrichtung 10 oberhalb einer Trägerschiene 12 gezeigt, die zusammen ein (Befestigungs-) System 14 bilden. Die Klemmvorrichtung 10 weist ein Klemmteil 16, einen Nutenstein 18 und eine sich in axialer Richtung Z erstreckende Gewindestange 20 auf. Die Gewindestange 20 kann eine Schraube 21 mit einem (Schrauben-)Kopf 22 sein. Bei der Trägerschiene 12 kann es sich um eine Profilschiene 24 mit einer oberseitigen Längsnut 26 handeln. Der Nutenstein 18 ist so dimensioniert, dass er in der in Fig. 1 gezeigten Vormontagestellung vertikal (parallel zur Z-Richtung) in ein Inneres der hinterschnitten ausgebildeten Nut 26 abgesenkt werden kann. Da der Nutenstein 18 üblicherweise eine parallelogrammförmige Grundfläche aufweist, reicht üblicherweise eine Drehung von 20 - 50° aus, um den Nutenstein 18, vorzugsweise formschlüssig, in der Nut 26 zu verspannen, d.h. zu arretieren.

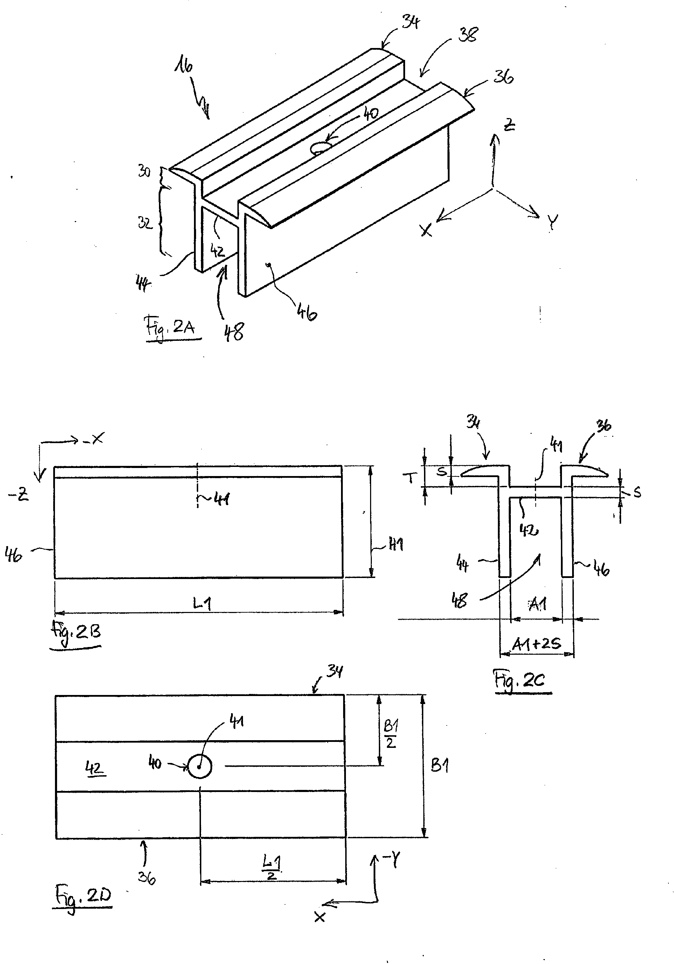

Bezug nehmend auf Fig. 2 sind verschiedene, isolierte Ansichten des Klemmteils 16 der Fig. 1 gezeigt. Fig. 2A zeigt eine perspektivische Ansicht. Fig. 2B zeigt eine Seitenansicht. Fig. 2C zeigt eine Sicht auf die Vorderseite des Klemmteils 16. Fig. 2D zeigt eine Draufsicht. Nachfolgend wird das Klemmteil 16 unter Bezugnahme auf alle Ansichten 2A bis 2D beschrieben werden.

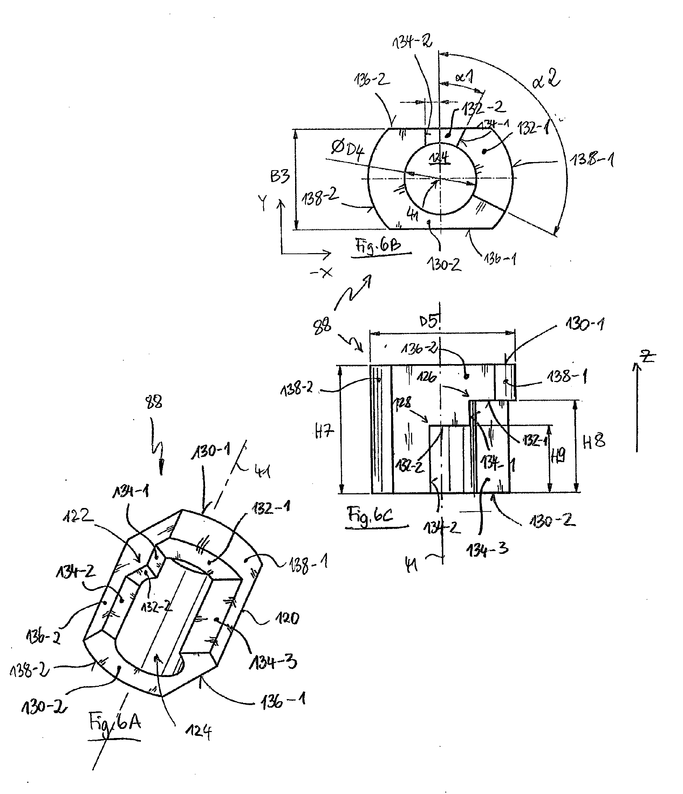

Das Klemmteil 16 weist einen oberen Kopfabschnitt 30 und einen unteren Stützabschnitt 32 auf. Im Querschnitt ist das Klemmteil 16 im Wesentlichen T-förmig. Der Kopfabschnitt 30 weist seitlich, flanschartig auskragende Kragenelemente 34 und 36 auf, die dazu dienen, seitlich angrenzende PV-Module (nicht dargestellt) von oben vertikal auf der Trägerschiene 12 (Fig. 1) zu fixieren. Zwischen den Kragenelementen 34 und 36 ist ein Kanal 38 mit einer vorzugsweise zentral angeordneten Öffnung 40 angeordnet. Ein Boden des Kanals 38 wird durch eine eben verlaufende Querwand 42 definiert, die sich zwischen parallelen Seitenwänden 44 und 46 erstreckt, die dem Stützabschnitt definieren. In der Längsrichtung X ist das Klemmteil 16 vorzugsweise offen ausgebildet. Die Seitenwände 44 und 46 dienen zum seitlichen Arretieren der nicht dargestellten PV-Module. Die Seitenwände 44 und 46 definieren einen U-förmigen Aufnahmeraum 48 für einen unter Bezugnahme auf Fig. 6 noch genauer zu erläuternden Gegenhalter 88. Der Aufnahmeraum 48 ist nach unten (-Z) offen ausgebildet.

Die Mittelachse der Öffnung 40 ist mit 41 bezeichnet und wird nachfolgend auch als Montage- oder Betätigungsachse bezeichnet werden. Die Mittelachse 41 halbiert einen Abstand A1 zwischen Innenseiten der Seitenwände 44 und 46. Die Seitenwände 44 und 46 weisen jeweils eine Stärke S auf, die im Beispiel der Fig. 1 im Bereich von 3 mm liegt. Der (Innen-)Abstand A1 kann in einer Größenordnung von beispielsweise von 14 mm liegen. In diesem Fall beträgt der Außenabstand der Seitenwände 44 und 46 20 mm. Eine Tiefe T des Kanals 38 (Fig. 2C) kann in der Größenordnung von 6 mm gewählt werden. Die Öffnung 40 kann einen Durchmesser von 6,5 mm aufweisen. Eine Breite B1 (Fig. 2D) des Klemmteils 16 kann 40 mm betragen. Eine Länge L1 (Fig. 2B) beträgt exemplarisch 80 mm, wobei eine Höhe H1 (Fig. 2B) des Klemmteils 16 31,5 mm beträgt. Es versteht sich, dass die genannten und noch zu nennenden Maßangaben exemplarischer Natur sind, wobei die Maßangaben zum System 14 der Fig. 1 so bereits erfolgreich realisiert wurden.

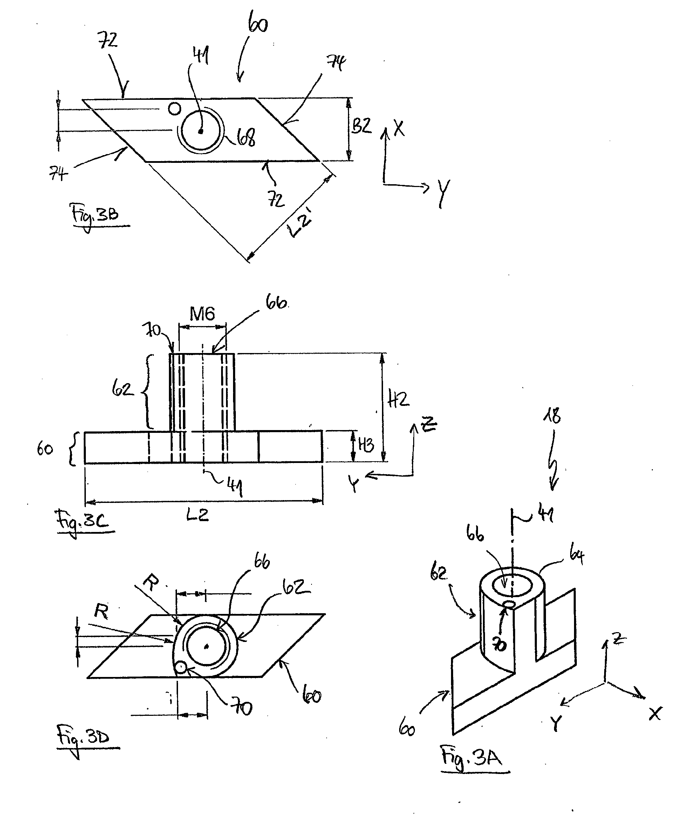

Fig. 3 zeigt verschiedene Ansichten des Nutensteins 18 der Fig. 1. Fig. 3A zeigt eine perspektivische Ansicht. Fig. 3B zeigt eine Ansicht einer Unterseite. Fig. 3C zeigt eine Seitenansicht und Fig. 3D zeigt eine Draufsicht. Nachfolgend wird der Nutenstein 18 unter Bezugnahme auf alle Ansichten 3A bis 3D beschrieben werden. Fig. 3 zeigt den Nutenstein 18 in der Orientierung der Vormontagestellung gemäß der Fig. 1.

Der Nutenstein 18 weist ein hülsenförmiges bzw. zylindermantelförmiges, innen hohles Verbindungselement 62 und ein vorzugsweise quaderförmiges Arretierelement 60 mit Grundfläche auf, die insbesondere parallelogrammförmig sein kann. Das Arretierelement 60 und das Verbindungselement 62 können einstückig oder mehrteilig aufgebaut sein. Fig. 3 zeigt einen einteiligen Nutenstein 18. Unter einer Hülse wird hier ein länglicher, runder, vorzugsweise kreisrunder, innen hohler Gegenstand verstanden, in welchen man etwas einführen kann.

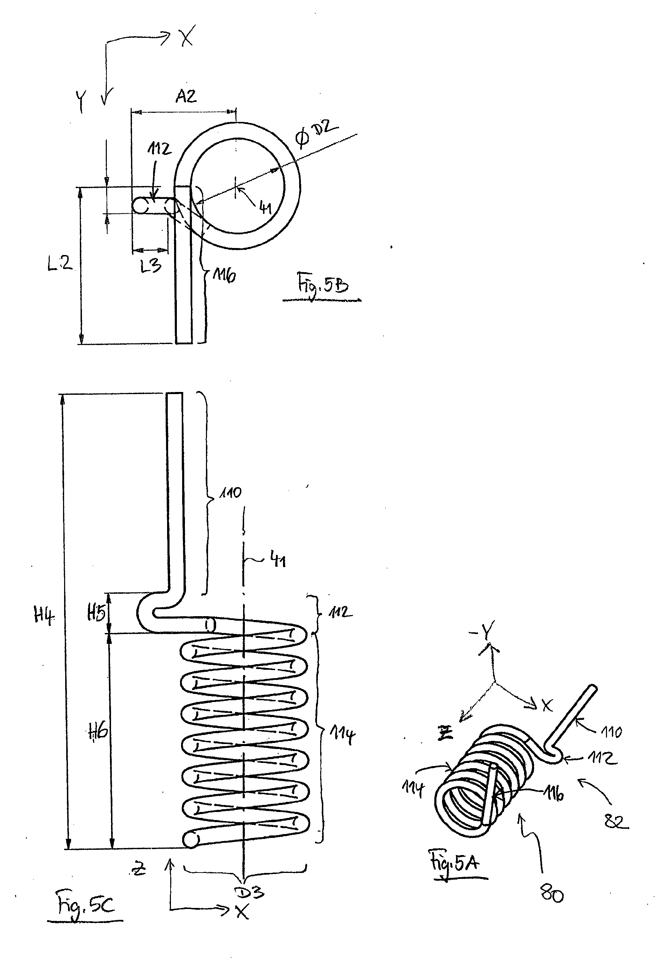

Das Verbindungselement 62 weist einen innen hohlen, zylindermantelähnlichen Körper 64 mit einer vorzugsweise durchgehenden ersten, zentralen Öffnung 66 auf, die vorzugsweise mit einem Innengewinde 68 versehen ist. Im zusammengebauten Zustand der Klemmvorrichtung 10 ist die erste Öffnung 66 koaxial zur Montageachse 41 orientiert. In einem beliebig wählbaren, umfänglichen Bereich (Fig. 3D) weist der ansonsten zylinderförmig ausgebildete Körper 64 eine Verdickung auf, wo eine weitere, zweite Öffnung 70 vorgesehen ist, die sich parallel zur ersten Öffnung 66 erstreckt. Die zweite Öffnung 70 weist einen Durchmesser auf, der geeignet ist, ein Federelement 80 aufzunehmen, das nachfolgend unter Bezug auf Fig5 noch näher beschrieben werden wird. Die zweite Öffnung 70 dient insbesondere zur gleitenden Aufnahme eines Teils des Federelements 80. Die zweite Öffnung 70 geht hier durch das Verbindungselement 62 und das Arretierelement (vollständig) hindurch. Es versteht sich, dass die zweite Öffnung 70 auch nur im Arretierelement 60 vorgesehen sein kann, und zwar außerhalb des Bereichs, wo das Verbindungselement 62 auf dem Arretierelement 60 aufsitzt.

Sowohl die zweite Öffnung 70 als auch die erste Öffnung 66 können sich durch eine gesamte Höhe H2 des Nutensteins 18, das heißt insbesondere auch durch eine Höhe H3 des Arretierelements 60, erstrecken (Fig. 3C). Eine Gesamtlänge des Nutensteins 18 in der Längsrichtung Y ist mit L2 bezeichnet. Eine Gesamtbreite des Nutensteins 18, sowie des Arretierelements 60 und des Verbindungselements 62, ist mit B2 bezeichnet (Fig. 3B).

Das Arretierelement 60 weist üblicherweise eine im Wesentlichen parallelogrammförmige Grundfläche auf, wie es in Fig. 3B gezeigt ist. Diese Grundfläche wird durch parallele Längsseiten 72 und parallele Querseiten 74 gebildet. Die in der Fig. 3B eingezeichnete Länge L2' entspricht einer (maximalen) Breite der Nut 26 der Trägerschiene 12 der Fig. 1 (in der X-Richtung). Die Höhe H3 des Arretierelements 60 ist vorzugsweise so gewählt, dass das Arretierelement 60 mit seinen Querseiten 74 flächig an seitlichen Wänden 100 (Fig. 1) der Nut 26 im Bereich der (maximalen Breite) der Nut 26 anliegt.

Die Verbreiterung des zylinderförmigen Körpers 64, um die zweite Öffnung 70 vorsehen zu können, erfolgt derart, dass die Breite B2 des Nutensteins 18 nicht überschritten wird, da der Nutenstein 18, insbesondere das Verbindungselement 62, in den Aufnahmeraum 48 (vergleiche Fig. 2A und 2C) einführbar sein muss. In der (Vor-)Montagestellung der Fig. 1 sind die Längsseiten 72 des Arretierelements 60 des Nutensteins 18 senkrecht zu den Seitenwänden 44 und 46 des Klemmteils 16 orientiert. Die Längsseiten 72 sind dann aber auch parallel zu Seitenrändern der Nut 26 orientiert. Die Nut 26 ist in ihrem oberen Bereich mindestens so breit wie die Breite B2 des Arretierelements 60 (Fig. 3B).

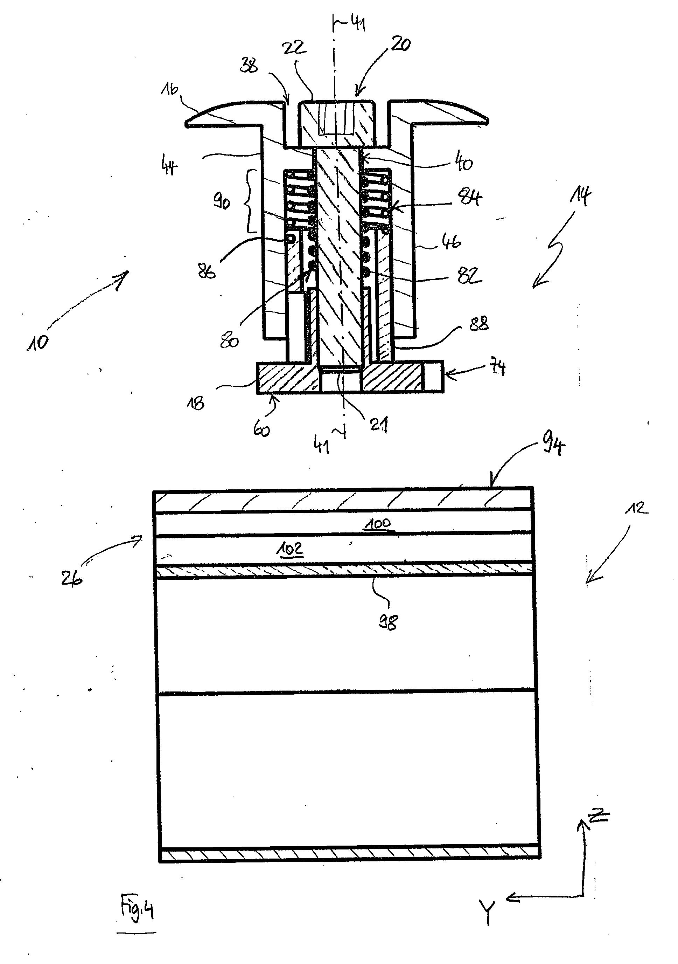

Fig. 4 zeigt einen Schnitt durch das System 14 entlang der Linie IV-IV der Fig. 1. Im oberen Teil der Fig. 4 ist die Klemmvorrichtung 10 gezeigt. Im unteren Teil der Fig. 4 ist die Trägerschiene 12 mit der Nut 26 gezeigt.

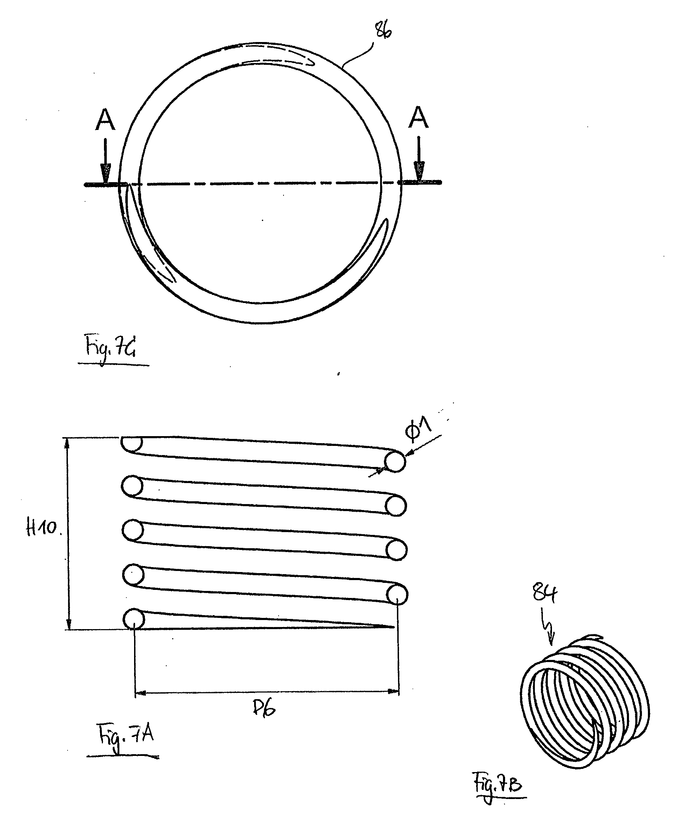

Die Klemmvorrichtung 10 weist neben dem Klemmteil 16, dem Nutenstein 18 und der Gewindestange 20 ferner zumindest ein erstes Federelement 80, zum Beispiel eine Torsionsfeder 82, auf. Optional kann auch ein zweites Federelement 84, z.B. eine Druckfeder 86, vorgesehen sein. Die Federelemente 80 und 84 werden unter Bezugnahme auf die Fig. 5 und 7 noch genauer beschrieben werden.

Des Weiteren weist die Klemmvorrichtung 10 einen hülsenförmigen Gegenhalter 88 auf, der unter Bezugnahme auf Fig. 6 noch genauer beschrieben werden wird.

Der Aufbau der Klemmvorrichtung 10 wird anhand der Fig. 4 nachfolgend in Bezug auf die Montageachse 41 erläutert, die zentral durch die (kreis-) runde Öffnung 40 im Klemmteil 16 verläuft. Die Gewindestange 20 ist von oben in die Öffnung 40 entlang der Montageachse 41 eingeführt und stößt mit ihrem Kopf 22 an den Boden des Kanals 38, d.h. an die Querwand 42. Da der Kopf 22 einen größeren Durchmesser als die Öffnung 40 hat, sitzt die Gewindestange 20 somit (in der negativen Z-Richtung) verliersicher im Klemmteil 16.

Wenn die Gewindestange 20 in das Klemmteil 16 eingeführt ist, können die Torsionsfeder 82 und die Druckfeder 84 von unten auf die Gewindestange 20 aufgeschoben werden. Ein Innendurchmesser der Torsionsfeder 82 ist so gewählt, dass die Gewindestange 20 in die Torsionsfeder 82 eingeführt werden kann. Ein Außendurchmesser der Torsionsfeder 82 ist kleiner als ein Innendurchmesser der optionalen Druckfeder 86 gewählt, so dass die Torsionsfeder 82 innerhalb der Druckfeder 86 sitzt. Die Torsionsfeder 82, die Druckfeder 86 und die Gewindestange 20 sind koaxial zur Montageachse 41 angeordnet.

Anschließend wird der hülsenförmig ausgebildete Gegenhalter 66 aufgeschoben. Ein Innendurchmesser des Gegenhalters 88 ist so gewählt, dass die Gewindestange 20 mit der aufgesteckten Torsionsfeder 82 koaxial durch ein Inneres des Gegenhalters 88 geführt werden kann. Ein Außendurchmesser des Gegenhalters 88 ist so gewählt, dass der Gegenhalter 88, vorzugsweise verdrehsicher, in den Aufnahmeraum 48 des Klemmteils 16 eingeführt werden kann. Der Außendurchmesser des Gegenhalters 88 ist kleiner als der Abstand A1 (vergleiche Fig. 2C) zwischen den Seitenwänden 44 und 46 des Klemmteils 16.

Sobald der Gegenhalter 88 auf die Gewindestange 20 aufgeschoben ist, auf der die Federelemente 80 und 84 vormontiert sind, kann die Gewindestange 20 in die Öffnung 66 des Nutensteins 18 eingeführt werden. Dazu kann der Nutenstein 18 auf die Gewindestange 20 aufgeschraubt werden. Ein Außendurchmesser des Verbindungselements 62 (Schaft) des Nutensteins 18 ist so gewählt, dass er kleiner als der Innendurchmesser des hülsenförmigen Gegenhalters 88 ist. Der Nutenstein 18 wird so weit auf die Gewindestange 20 aufgeschraubt, dass zwischen einem, dem Kopf 22 der Gewindestange 20 gegenüberliegenden, Ende der Gewindestange 20 und einem Boden der ersten Öffnung 66 im Nutenstein 18, soweit der Boden vorhanden ist, ein Spiel verbleibt, um den Nutenstein 18 während eines Montage- und Fixierungsvorgangs in der Z-Richtung innerhalb der Nut 26 bewegen zu können.

Die Druckfeder 86 ist in einem Hohlraum 90 angeordnet, der sich zwischen einer Unterseite der Querwand 42 des Klemmteils 16 (vergleiche Figur 2A) und einer oberen Stirnseite 130- 1 (Fig. 6A) des Gegenhalters 88 ausbildet, wenn alle Komponenten der Klemmvorrichtung 10 vormontiert sind, wie es in der Fig. 4 gezeigt ist.

Bezug nehmend auf Fig. 5 sind verschiedene Ansichten des ersten Federelements 80, d.h. der exemplarischen Torsionsfeder 82, gezeigt. Fig. 5A zeigt eine perspektivische Ansicht. Fig. 5B zeigt eine Draufsicht und Fig. 5C zeigt eine Seitenansicht. Die Ausgestaltung des ersten Federelements 80 wird nachfolgend unter Bezugnahme auf alle Ansichten der Fig. 5A bis 5C beschrieben werden.

Das erste Federelement 80 bzw. die Torsionsfeder 82 weist einen exzentrisch angeordneten, vorzugsweise linearen, Verbindungsabschnitt 110, einen knieförmigen radial vorstehenden Abschnitt 112, einen koaxialen spiralförmigen Abschnitt 114 und einen radialen linearen Anschlagsabschnitt 116 auf. Der Verbindungsabschnitt 110 wird in die zweite Öffnung 70 im Nutenstein 18 (vergleiche Fig. 3A) eingeführt. Der knieförmige Abschnitt 112 wechselwirkt mit einer stufenförmigen Ausnehmung 122 des Gegenhalters 88, die unter Bezugnahme auf Fig. 6A noch näher beschrieben werden wird. Der spiralförmige Abschnitt 114 sitzt auf der Gewindestange 20, wie es in Fig. 4 gezeigt ist. Der lineare radiale Anschlagsabschnitt 116 berührt im montierten Zustand der Klemmvorrichtung 10, wie er in Fig. 4 gezeigt ist, zumindest eine der Seitenwände 44 und 46. Die entsprechende Seitenwand 44 und/oder 46 dient als Widerlager, wenn die Torsionsfeder 82 gespannt ist bzw. wird.

Ein Innendurchmesser D2 des spiralförmigen Abschnitts 114 beträgt exemplarisch 6 mm. Wenn die Torsionsfeder 82 eine Stärke von 1 mm aufweist, so beträgt ein Außendurchmesser D3 in diesem Fall 8 mm.

Eine Gesamthöhe H4 der Torsionsfeder 82 beträgt exemplarisch 29 mm, wobei eine Höhe H5 des knieförmigen Abschnitts 112 2,6 mm und eine Höhe H6 des spiralförmigen Abschnitts 114 dann 13,7 mm beträgt.

Eine Länge L2 des Anschlagsabschnitts 116 kann zum Beispiel 10 mm betragen, wobei eine Länge L3 des knieförmigen Abschnitts 112 dann 2,2 mm beträgt. Ein radial äußeres Ende des knieförmigen Abschnitts 112 kann 6,6 mm zur Montageachse 41 versetzt sein (vergleiche Abstand A2 in Fig. 5B).

Bezug nehmend auf Fig. 6 sind verschiedene Ansichten des Gegenhalters 88 gezeigt. In Fig. 6A ist eine perspektivische Ansicht gezeigt. In Fig. 6B ist eine Draufsicht und in Fig. 6c eine Seitenansicht gezeigt. Nachfolgend wird der Gegenhalter 88 unter Bezugnahme auf alle Ansichten der Fig. 6a bis 6c erläutert werden.

Der Gegenhalter 88 weist einen hülsenförmig ausgebildeten Körper 120 auf. Der Körper 120 weist eine stufenförmige Ausnehmung 122 auf. Im seinem Inneren ist der Körper 120 hohl und definiert einen zylindrischen Hohlraum 124, der zur Aufnahme der Gewindestange 20 und des ersten Federelements 80 dient. Ein Innendurchmesser D4 des Hohlraums 124 (vergleiche Fig. 6B) kann zum Beispiel 10 mm betragen und sollte größer als der Außendurchmesser D3 des ersten Federelements 80 und größer als die Breite B2 des Verbindungselements 62 (vergleiche Fig. 3a) des Nutensteins 18 sein.

Die stufenförmige Ausnehmung 122 bricht den hülsenförmigen Körper 120 in der radialen und axialen Richtung auf und bildet so eine erste Stufe 126 und eine zweite Stufe 128 (vergleiche Fig. 6c) im Körper 120 aus. Der Körper 120 weist eine obere Stirnfläche 130-1 und eine untere Stirnfläche 130-2 auf. Die erste Stufe 126 wird durch eine erste horizontale Fläche 132-1 und eine erste vertikale Fläche 134-1 definiert. Die zweite Stufe 126 wird durch eine zweite horizontale Fläche 132-2 und eine zweite vertikale Fläche 134-2 definiert. Die horizontalen und vertikalen Flächen 132 und 134 schließen vorzugsweise jeweils einen Winkel von im Wesentlichen 90° für die Stufen 126 und 128 ein. Die stufenförmige Ausnehmung 122 wird durch die erste und zweite horizontale Fläche 132-1 und 132-2 sowie die erste und zweite vertikale Fläche 134-1 und 134-2 sowie eine dritte vertikale Fläche 134-3 (vergleiche Fig. 6A) definiert.

Eine Höhe H7 des Gegenhalters 88 (vergleiche Fig. 6C) kann 18 mm betragen. Eine Höhe H8 der dritten vertikalen Fläche 134-3 kann 13 mm betragen. Die Höhe H9 der zweiten vertikalen Fläche 134-2 beträgt dann 9,5 mm. In diesem Fall beträgt ein Außendurchmesser D5 des Gegenhalters 88 20 mm.

Im vormontierten Zustand der Klemmvorrichtung 10 (vergleiche Fig. 1 und 4) liegt der knieförmige Abschnitt 112 des ersten Federelements 80 (vergleiche Fig. 5C) an der ersten vertikalen Fläche 134-1 der stufenförmigen Ausnehmung 122 (vergleiche Fig. 6b) an, d.h. in der ersten Stufe 126. Um die erste Stufe 126 zu überwinden und in die zweite Stufe 128 zu gelangen, muss der knieförmige Abschnitt 112 einen Winkel α1 überstreichen, der hier exemplarisch 27° beträgt. Der Winkel α1 entspricht im Wesentlichen dem Winkel, den der Nutenstein 18 aus seiner Montagestellung bis in eine Arretierstellung überstreicht, wie es nachfolgend noch näher erläutert werden wird.

Die stufenförmige Ausnehmung 122 umschließt im Beispiel der Fig. 5 einen Gesamtwinkel α2 von 117°.

Der Körper 120 des Gegenhalters 88 wird neben den Stirnflächen 130 durch eine erste und zweite gerade, äußere Seitenwand 136-1 und 136-2 (vergleiche Fig. 6b) sowie eine erste und zweite gekrümmte, äußere Seitenwand 138-1 und 138-2 definiert. Der Abstand zwischen den (parallelen) geraden Seitenwände 136-1 und 136-2 definiert eine Breite B3, die im Beispiel der Fig. 6 14 mm beträgt. Im vormontierten Zustand der Klemmvorrichtung 10, wie er in den Fig. 1 und 4 gezeigt ist, liegen die geraden Seitenwände 136-1 und 136-2 den Innenseiten der Seitenwände 44 und 46 des Klemmteils 16 gegenüber. Zwischen den geraden Seitenwänden 136 des Gegenhalters 88 und den Seitenwänden 44 und 46 des Klemmteils 16 ist ein geringes Spiel vorgesehen, so dass das Klemmteil 16 relativ zum Gegenhalter 88 zumindest in der Z-Richtung bewegt werden kann.

Bezug nehmend auf Fig. 7 ist ein zweites, optionales Federelement 84, z.B. eine Druckfeder 86, in verschiedenen Ansichten gezeigt. Fig. 7A zeigt eine Schnittansicht entlang der Linie A-A der Draufsicht der Fig. 7C. Fig. 7B zeigt eine perspektivische Ansicht der Druckfeder 86.

Eine Höhe H10 der Druckfeder 86 beträgt in dem hier betrachteten Beispiel der Klemmvorrichtung 10 der Fig. 19,5 mm. Die Drahtstärke beträgt exemplarisch 1 mm. Ein Durchmesser D6 beträgt 12,8 mm, so dass ein Innendurchmesser der Feder 86 11.8 mm und ein Außendurchmesser 13,8 mm beträgt.

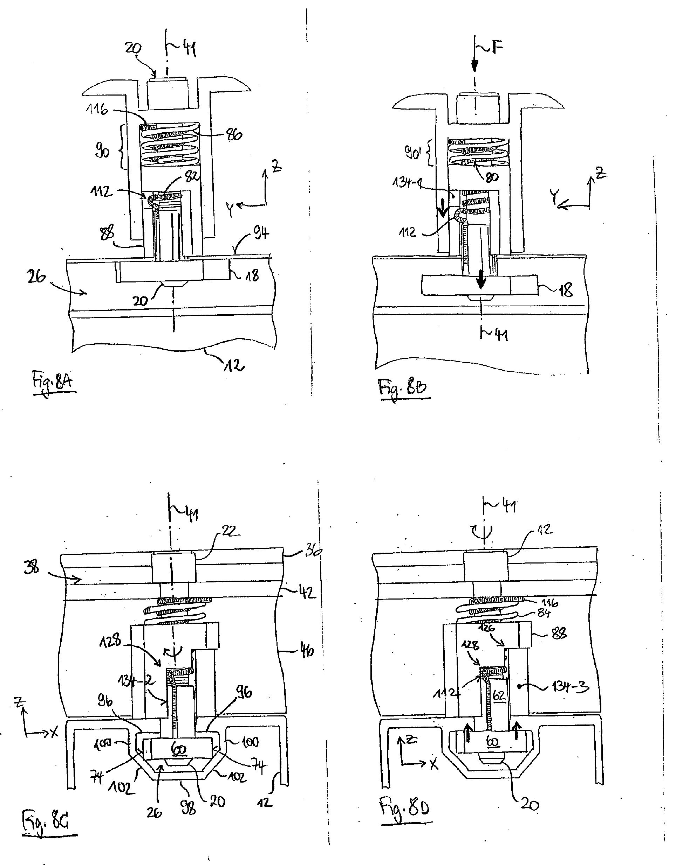

Bezug nehmend auf die Fig. 8 wird nachfolgend ein Vorgang beschrieben, bei dem das System 14 der vorstehend erläuterten Fig. 1 bis 7 zum Einsatz kommt.

Fig. 8A zeigt eine Situation, in der der Nutenstein 18, ausgehend von der Situation der Fig. 1 und 4, entlang der Z-Richtung, das heißt vertikal, gerade in die Nut 26 eingelassen ist, bis die untere Stirnseite 130-2 des Gegenhalters 88 (Fig. 6C) auf einer Oberseite 94 (Fig. 1) der Trägerschiene 12 aufliegt, in der eine Nutöffnung 92 (Fig. 1) vorgesehen ist, die sich in der Längsrichtung Y der Trägerschiene 12 bzw. der Querrichtung Y des Klemmteils 10 erstreckt. Die Nut 26 (vergleiche Fig. 1) wird zum Beispiel durch seitlich horizontale Überhänge 96, einen horizontalen Boden 98, Vertikalwände 100 und (optionale) Schrägwände 102 definiert. Die Nut 26 ist C-förmig bzw. T-förmig, d.h. hinerschnitten ausgebildet.

Sobald der Nutenstein 18 in die Nut 26 eingeführt ist, kann in axialer Richtung (Z-Richtung) ein Druck (vergleiche Pfeil F in Fig. 8B) auf das Klemmteil 16 und/oder die Gewindestange 20 ausgeübt werden, so dass der knieförmige Abschnitt 112 die erste Stufe 126 der stufenförmigen Ausnehmung 122 in der vertikalen Richtung Z überwindet, wobei der Nutenstein 18 relativ zum Gegenhalter 88 weiter in die Nut 26 abgesenkt wird. In der Fig. 8b ist diese Situation gezeigt, bei der der Hohlraum 90' so weit verkürzt ist, dass das Federelement 80 derart komprimiert ist, dass sich der knieförmige Abschnitt 112 entlang der ersten vertikalen Fläche 134-1 der ersten Stufe 126 vertikal über die erste Stufe 126 hinaus bewegt. Eine ursprüngliche Höhe des Hohlraums 90 sowie eine Federkonstante des ersten Federelements 80 sind so gewählt, dass nach Erreichen eines Kompressionswegs (Verkürzung des Hohlraums 90 auf 90') der knieförmige Abschnitt 112 die erste vertikale Fläche 134-1 überwunden hat, während dessen in dem Federelement 80 zusätzlich Energie gespeichert wird. Durch die Kompression des ersten Federelements 80 bewegt sich der knieförmige Abschnitt 112 vertikal nach unten, während er durch die in dem Federelement 80 gespeicherte Energie immer stärker gegen die erste vertikale Fläche 134 gedrückt wird.

Sobald der knieförmige Abschnitt 112 die erste Stufe 126 überwunden hat (Fig. 8B), veranlasst die in der Torsionsfeder 82 gespeicherte Energie den knieförmigen Abschnitt 112 sich in Richtung der zweiten vertikalen Fläche 134-2 zu drehen, wie es in der Fig. 8C angedeutet ist. Der knieförmige Abschnitt 112 bewegt sich dabei in die zweite Stufe 128. Durch die Rotation des knieförmigen Abschnitts 112, der in der Fig. 5B in einem entspannten Zustand der Torsionsfeder 82 gezeigt ist, dreht sich der Nutenstein 18, der über den Verbindungsabschnitt 110 in der zweiten Öffnung 70 direkt an den Nutenstein 18 gekoppelt ist, um den gleichen Winkelbetrag (α1) wie der knieförmige Abschnitt 112.

In der Fig. 8C ist eine Vorstufe einer Arretierstellung der Klemmvorrichtung 10 gezeigt. In dieser Vorstufe befindet sich das parallelogrammförmige Arretierelement 60 hinsichtlich des Drehwinkels bereits in einer Arretierstellung. Die schrägen Querseiten 74 des Arretierelements 60 liegen an den seitlichen Vertikalwänden 100 und/oder Schrägwänden 102 der Nut 26, vorzugsweise bündig, an. Das Arretierelement 60 befindet sich in der Fig. 8C aber noch nicht in seiner endgültigen Arretierstellung, weil der Nutenstein 18 in der vertikalen Richtung (Z-Richtung) noch zu tief in der Nut 26 sitzt, um eine kraftschlüssige Verbindung des Klemmteils 16 mit der Trägerschiene 12 herzustellen.

Um diese kraftschlüssige Verbindung herzustellen, wird die Gewindestange 12 entsprechend (von außen) zum Beispiel mit einem Sechskantschlüssel oder Ähnlichem gedreht. Durch diese Drehung der Gewindestange 20 bewegt sich der mit dem Innengewinde 68 versehene Nutenstein 18 vertikal nach oben in Richtung der Nutöffnung 92. Sobald das Arretierelement 60 mit seiner Oberseite an die Unterseiten der Überhänge 96 anstößt, wie es in Fig. 8D gezeigt ist, ist die kraftschlüssige Verbindung hergestellt.

Es versteht sich, dass die zuvor genannten Maße exemplarischer Natur sind und auf das in der Fig. 1 gezeigte System abgestimmt sind. Um unterschiedlich hohe PV-Module zwischen den Kragenelementen 34 und 36 und der Trägerschiene 12 effektiv einklemmen zu können, können die Höhen H1, H4 bis H6 und/oder H7 bis H9 entsprechend variiert und aneinander angepasst werden. Alternativ oder ergänzend können unterschiedlich hohe Unterlegscheiben zwischen den Federelementen 80 und/oder 84 und der Unterseite der Querwand 42 im Hohlraum 90 zusätzlich vorgesehen werden. Dabei ist es nicht zwingend erforderlich, dass die axiale Länge der Gewindestange 20 angepasst wird, da die Gewindestange 20 unterschiedlich tief in die Öffnung 66 des Nutensteins 18 eingedreht werden kann.

Die angegebenen Höhen, Breiten, Längen, Durchmesser und Ähnliches sind jeweils in der Praxis üblicherweise mit einer entsprechenden Toleranz versehen, auf die hier nicht näher eingegangen wurde.

Es versteht sich, dass das Klemmteil 16 nicht zwingend symmetrisch ausgebildet sein muss. Das Klemmteil 16 kann vielmehr auch mit nur einem Kragenelement 34 oder 36 ausgestattet sein, z.B. wenn es als seitliche Begrenzung eines PV-Modulfelds eingesetzt wird.

Ein weiterer Vorteil des Systems 14 ergibt sich bei der Demontage. Zuerst wird über eine Drehung der Gewindestange 20 der Nutenstein 18 vertikal nach unten bewegt, um die kraftschlüssige Klemmung zu lösen. Dann kann die Klemmvorrichtung 10 leicht angehoben werden, auch wenn sich der Nutenstein 18 noch immer in der Arretierstellung befindet. Dieses Spiel in der vertikalen Richtung Z reicht üblicherweise aus, um die Klemmvorrichtung 10 seitlich, das heißt längs der Trägerschiene 12, zu bewegen oder um das PV-Modul durch Verkippen zu entfernen. Sobald das oder die PV-Module entfernt sind, kann das Klemmteil 16 so relativ zur Trägerschiene 12 verdreht werden, dass der knieförmige Abschnitt 112 der Torsionsfeder 82 aus der zweiten Stufe 128 in die erste Stufe 126 zurückspringt. Anschließend kann das Klemmteil 16 in der gleichen Richtung weitergedreht werden, so dass der knieförmige Abschnitt 112 an die dritte vertikale Fläche 134-3 anstößt, um den Nutenstein 18 aus seiner Arretierstellung in die Montagestellung zu drehen. Danach kann die Klemmvorrichtung 10 durch vertikales Herausziehen des Nutensteins 18 aus der Nut 26 entfernt werden. Der Monteur läuft dabei nicht Gefahr, sich durch das oder die Federelemente 80, 84 zu verletzen. Die Federelemente 80, 84 sind in das Klemmteil 16 integriert und die Hände des Monteurs sind durch die Seitenwände 44 und 46 des Klemmteils 16 geschützt. Es wird kein Werkzeug benötigt, um die Klemmvorrichtung 10 aus der Trägerschiene 12 zu entfernen. Dies gilt auch für die Montage. Sowohl bei der Montage als auch bei der Demontage wird lediglich ein Werkzeug benötigt, um die Gewindestange 20 zu drehen. Dadurch vereinfacht sich sowohl die Montage als auch die Demontage.

In der oben stehenden Beschreibung der Figuren wurden gleiche Teile und Merkmale mit den gleichen Bezugsziffern versehen. Die in der Beschreibung enthaltenen Offenbarungen sind sinngemäß auf gleiche Teile und Merkmale mit denselben Bezugszeichen übertragbar. Lage- und Orientierungsangaben (zum Beispiel "oben", "unten", "seitlich", "längs", "quer", "horizontal", "vertikal" oder dergleichen) sind auf die unmittelbar beschriebene Figur bezogen. Bei einer Änderung der Lage oder Orientierung sind die Angaben aber sinngemäß auf die neue Lage bzw. Orientierung zu übertragen.

## Patentansprüche

1. Vorrichtung (10) zum kraftschlüssigen Klemmen eines PV-Moduls auf eine Trägerschiene (12), die eine hinterschnitten ausgebildete Nut (26) aufweist, mit:
einer Gewindestange (20) mit einem Kopf (22);
einem Klemmteil (16), das eine Öffnung (40) aufweist, in welcher die Gewindestange (20) verliersicher steckt;
einem Nutenstein (18), der mit einem dem Kopf (22) gegenüberliegenden Ende der Gewindestange (20) verbunden ist, wobei der Nutenstein (18) in einer Arretierstellung innerhalb der Nut (26) der Trägerschiene (12) entnahmesicher arretierbar und in einer Montagestellung, die gegenüber der Arretierstellung verdreht ist, axial in die Nut (26) einführbar ist;
einem hülsenförmigen Gegenhalter (88), der im Klemmteil (16) sitzt und durch den sich die Gewindestange (20) in axialer Richtung (41) erstreckt; und
einem Federelement (80), das an den Nutenstein (18) gekoppelt ist, wobei sich das Federelement (80) zwischen dem Gegenhalter (88) und der Gewindestange (20) in der axialen Richtung (41) durch den Gegenhalter (88) erstreckt und wobei das Federelement (80) einen sich radial nach außen erstreckenden, knieförmigen Abschnitt (112) aufweist;
wobei der knieförmige Abschnitt (112) des Federelements (80) mit einer stufenförmigen Ausnehmung (120) im Gegenhalter (88) derart zusammenwirkt, dass der knieförmige Abschnitt (120) bei Ausübung einer axialen Kraft auf das Federelement (80) eine erste Stufe (126) der stufenförmigen Ausnehmung (120), die den knieförmigen Abschnitt (112) in der vorgespannten Montagestellung hält, in der axialen Richtung (41) überwindet, um dann durch eine zumindest teilweise Entspannung des Federelements (80) entlang der stufenförmigen Ausnehmung (120) in einer Umfangsrichtung in eine zweite Stufe (128) geführt zu werden, die den knieförmigen Abschnitt (112) in der Arretierstellung hält.

2. Vorrichtung nach Anspruch 1, wobei das Federelement (80) einen spiralförmigen Abschnitt (114) aufweist, dessen Innendurchmesser (D2) so gewählt ist, dass das Federelement (80) axial auf die Gewindestange (20) steckbar ist, und dessen Außendurchmesser (D3) so gewählt ist, dass Federelement (80) in radialer Richtung zwischen die innen angeordnete Gewindestange (20) und den außen angeordneten Gegenhalter (88) passt.

3. Vorrichtung nach Anspruch 1 oder 2, wobei das Federelement (80) einen ersten Anschlagsabschnitt (116) aufweist, der sich im Wesentlichen in der radialen Richtung erstreckt und der sich an das Klemmteil (16) anlegt.

4. Vorrichtung nach den Ansprüchen 2 und 3, wobei das Federelement (80) einen Verbindungsabschnitt (110) aufweist, der dem Anschlagsabschnitt (116), dem spiralförmigen Abschnitt (114) und dem darauf wieder folgenden knieförmigen Abschnitt (112) gegenüberliegt und der sich in der axialen Richtung (41) erstreckt.

5. Vorrichtung nach einem der Ansprüche 1 bis 4, wobei das Klemmteil (16) eine Aufnahme definiert, die in Richtung der Trägerschiene (12) offen ist und einen Aufnahmeraum (48) für den Gegenhalter (88) definiert.

6. Vorrichtung nach einem der Ansprüche 1 bis 5, wobei der Nutenstein (18) eine parallelogrammförmige Grundfläche aufweist.

7. Vorrichtung nach einem der Ansprüche 1 bis 6, wobei die Gewindestange (20) in eine erste Öffnung (66) des Nutensteins (18) mit Spiel eingeschraubt ist und der Nutenstein (18) eine weitere Öffnung (70) zur axialen Aufnahme eines Verbindabschnitts (110) des Federelements (80) aufweist.

8. Vorrichtung nach einem der Ansprüche 1 bis 7, wobei ein weiteres Federelement (84) vorgesehen ist, welches das Federelement (80) koaxial umgibt und in einem Hohlraum (90) angeordnet ist, der sich zwischen einer oberen Stirnseite (130-1) des Gegenhalters (88) und einer Unterseite einer horizontalen Querwand (42) des Klemmteils (16) bildet.

9. Vorrichtung nach einem der Ansprüche 1 bis 8, wobei das Federelement (80) eine Torsionsfeder (82) und/oder das weitere Federelement (84) eine Druckfeder (86) ist.

## Claims

1. A device (10) for non-positively clamping a PV module onto a support rail (12), which comprises an undercut groove (26), comprising:
a threaded rod (20) having a head (22);
a clamping part (16) having an opening (40) into which the threaded rod (20) is inserted without a risk of getting lost;
a groove pin (18) which is connected to an end of the threaded rod (20) being arranged oppositely to the head (22), wherein the groove pin (18) is lockable in a locking position within the groove (26) of the support rail (12) in a withdraw-safe manner, and in a mounting position, which is rotated relative to the locking position, is insertable axially into the groove (26);
a sleeve-shaped counter-holding device (88) seating in the clamping part (16),
wherein the threaded rod (20) extends through the counter-holding device (88) in an axial direction (41); and
a spring element (80) coupled to the groove pin (18), wherein the spring element (80) extends between the counter-holding device (88) and the threaded rod (20) in the axial direction (41) through the counter-holding device (88), and wherein the spring element (80) comprises an elbow-shaped section (112) extending radially to an outside;
wherein the elbow-shaped section (112) of the spring element (80) cooperates with a step-shaped recess (120) within the counter-holding device (88) such that the elbow-shaped section (112) overcomes, during exertion of an axial force onto the spring element (80), a first step (126) of the step-shaped recess (120), which holds the elbow-shaped section (112) in the prestressed mounting position in the axial direction (41), in order for being guided subsequently along the step-shaped recess (120) in a circumferential direction into a second step (128) due to an at least partial stress relief of the spring element (80), wherein the second step (128) holds the elbow-shaped section (112) in the locking position.

2. The device of claim 1, wherein the spring element (80) has a spiral section (114), an inner diameter (D2) of which is selected such that the spring element (80) can be plugged axially onto the threaded rod (20) and the outer diameter (D3) of which is selected such that the spring element (80) fits in a radial direction between the threaded rod (20), which is arranged at the inside, and the counter-holding device (88), which is arranged at the outside.

3. The device of claim 1 or 2, wherein the spring element (80) comprises a first abutting section (116) substantially extending in the radial direction and being in contact with the clamping part (16).

4. The device of claims 2 and 3, wherein the spring element (80) comprises a connecting section (110) which is arranged oppositely to the abutting section (116), the spiral section (114) and the elbow-shaped section (112) adjacent thereto and which extends in the axial direction (41).

5. The device of one of the claims 1 to 4, wherein the clamping part (16) defines a receiving device which is open towards the support rail (12), and a receiving space (48) for the counter-holding device (88).

6. The device of one of the claims 1 to 5, wherein the groove pin (18) comprises a parallelogram-like base area.

7. The device of one of the claims 1 to 6, wherein the threaded rod (20) is screwed into a first opening (66) of the groove pin (18) including a clearance, and wherein the groove pin (18) comprises a further opening (70) for axially receiving a connecting section (110) of the spring element (80).

8. The device of one of the claims 1 to 7, wherein an additional spring element (84) is provided, which surrounds the spring element (80) coaxially and is arranged in a hollow space (90), which is formed between an upper face side (130-1) of the counter-holding device (88) and a lower side of a horizontal transversal wall (42) of the clamping part (16).

9. The device of one of the claims 1 to 8, wherein the spring element (80) is a torsion spring (82) and/or the additional spring element (84) is a compression spring (86).

## Revendications

1. Dispositif (10) pour serrer par engagement par force un module PV sur un rail de support (12), qui présente une rainure (26) réalisée en contre-dépouille, comprenant :
une tige filetée (20) avec une tête (22) ;
une partie de serrage (16) qui présente une ouverture (40) dans laquelle la tige filetée (20) est enfichée de manière imperdable ;
un coulisseau (18) qui est connecté à une extrémité de la tige filetée (20) opposée à la tête (22), le coulisseau (18) pouvant être bloqué dans une position de blocage à l'intérieur de la rainure (26) du rail de support (12) sans pouvoir être enlevé et pouvant être introduit axialement dans la rainure (26) dans une position de montage tournée par rapport à la position de blocage ;
un dispositif de fixation conjugué en forme de douille (88), qui repose dans la partie de serrage (16) et à travers lequel la tige filetée (20) s'étend dans la direction axiale (41) ; et
un élément de ressort (80), qui est accouplé au coulisseau (18), l'élément de ressort (80) s'étendant entre le dispositif de fixation conjugué (88) et la tige filetée (20) dans la direction axiale (41) à travers le dispositif de fixation conjugué (88) et l'élément de ressort (80) présentant une portion (112) de forme coudée s'étendant radialement vers l'extérieur ;
la portion de forme coudée (112) de l'élément de ressort (80) coopérant avec un évidement (120) de forme étagée dans le dispositif de fixation conjugué (88) de telle sorte que la portion de forme coudée (112), lorsqu'une force axiale est exercée sur l'élément de ressort (80), surmonte dans la direction axiale (41) un premier étage (126) de l'évidement de forme étagée (120) qui retient la portion de forme coudée (112) dans la position de montage précontrainte, afin d'être ainsi guidée par une détente au moins partielle de l'élément de ressort (80) le long de l'évidement de forme étagée (120) dans une direction périphérique dans un deuxième étage (128) qui retient la portion de forme coudée (112) dans la position de blocage.

2. Dispositif selon la revendication 1, dans lequel l'élément de ressort (80) présente une portion en spirale (114) dont le diamètre intérieur (D2) est choisi de telle sorte que l'élément de ressort (80) puisse être enfiché axialement sur la tige filetée (20), et dont le diamètre extérieur (D3) est choisi de telle sorte que l'élément de ressort (80) s'ajuste dans la direction radiale entre la tige filetée (20) disposée à l'intérieur et le dispositif de fixation conjugué (88) disposé à l'extérieur.

3. Dispositif selon la revendication 1 ou 2, dans lequel l'élément de ressort (80) présente une première portion de butée (116) qui s'étend essentiellement dans la direction radiale et qui s'applique contre la partie de serrage (16).

4. Dispositif selon les revendications 2 et 3, dans lequel l'élément de ressort (80) présente une portion de liaison (110) qui est opposée à la portion de butée (116), à la portion en spirale (114) et à la portion de forme coudée (112) suivant à nouveau celle-ci, et qui s'étend dans la direction axiale (41).

5. Dispositif selon l'une quelconque des revendications 1 à 4, dans lequel la partie de serrage (16) définit un logement qui est ouvert dans la direction du rail de support (12) et qui définit un espace de réception (48) pour le dispositif de fixation conjugué (88).

6. Dispositif selon l'une quelconque des revendications 1 à 5, dans lequel le coulisseau (18) présente une surface de base en forme de parallélogramme.

7. Dispositif selon l'une quelconque des revendications 1 à 6, dans lequel la tige filetée (20) est vissée avec jeu dans une première ouverture (66) du coulisseau (18) et le coulisseau (18) présente une ouverture supplémentaire (70) pour recevoir axialement une portion de liaison (110) de l'élément de ressort (80).

8. Dispositif selon l'une quelconque des revendications 1 à 7, dans lequel un élément de ressort supplémentaire (84) est prévu, lequel entoure coaxialement l'élément de ressort (80) et est disposé dans une cavité (90) qui est formée entre un côté frontal supérieur (130-1) du dispositif de fixation conjugué (88) et un côté inférieur d'une paroi transversale horizontale (42) de la partie de serrage (16).

9. Dispositif selon l'une quelconque des revendications 1 à 8, dans lequel l'élément de ressort (80) est un ressort de torsion (82) et/ou l'élément de ressort supplémentaire (84) est un ressort de compression (86).
